# EUROPEAN PATENT SPECIFICATION

(11) **EP 2 869 624 B1**
(45) Date of publication and mention of the grant of the patent: **10.08.2016**
(21) Application number: 13191388.1
(22) Date of filing: 04.11.2013
(51) Int. Cl.: H04W 24/04, H04W 36/00

(54) **A METHOD FOR RECONFIGURING A DE-CONFIGURED MOBILE COMMUNICATION CELL**
VERFAHREN ZUR REKONFIGURIERUNG EINER DEKONFIGURIERTEN MOBILEN KOMMUNIKATIONSZELLE
PROCÉDÉ DE RECONFIGURATION D'UNE CELLULE DE COMMUNICATION MOBILE DÉ-CONFIGURÉE

(43) Date of publication of application: 06.05.2015
(73) Proprietor: Kapsch CarrierCom AG, 1120 Wien (AT)
(72) Inventor: Guillemaut, Stéphane, 78580 MAULE (FR); Farine, Hélène, 78280 GUYANCOURT (FR)
(74) Representative: Weiser, Andreas

(56) References cited:
- US-A1- 2010 278 038
- "3rd Generation Partnership Project; Technical Specification Group GSM/EDGE Radio Access Network; External Network Assisted Cell Change (NACC) (Release 11)", 3GPP STANDARD; 3GPP TR 44.901, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. GERAN WG2, no. V11.0.0, 21 September 2012 (2012-09-21), pages 1-22, XP050649796, [retrieved on 2012-09-21]

## Description

The present invention relates to a method for reconfiguring a de-configured cell of a cellular mobile communication system, the system using a RAN Information Management protocol according to a 3GPP standard, wherein a first cell is connected to a first Base Station System and serves as a parenting cell to a second cell, the second cell being connected to a second Base Station System and being defined as an adjacent cell to the first cell, the first and the second Base Station System being linked via a Serving GPRS Support Node, the first Base Station System storing a list of cells being adjacent to the first cell and the second Base Station System storing a list of cells being parenting cells to the second cell.

The RAN Information Management protocol which is defined in the 3GPP technical specification TS 48.018 V11.2.0, "BSS GPRS Protocol (BSSGP)", downloadable from www.3gpp.org/ ftp/Specs/html-info/48018.htm, can be used in different mobile communication systems for packet switched data transmissions, such as GPRS/EDGE of GSM or GSM-R, UMTS or LTE. The RAN Information Management protocol allows to exchange information between two Base Station Systems (BSSs) using the Serving GPRS Support Node (SGSN) as a gateway.

By using this protocol, a Mobile Station which is about to leave said first cell can request communication parameters which are individual to said adjacent second cell the Mobile Station is about to enter. In this case the first cell is the parenting cell handing over the Mobile Station to the second cell while the second cell is the adjacent cell taking over the Mobile Station. Based on the individual communication parameters of the second cell, usually referred to as System Information, the handover of the Mobile Station from the parenting first to the adjacent second cell can be executed faster and more reliably. The RAN Information Management protocol is therefore desirable for handover specifically in safety critical high-speed mobile communication systems such as GSM-R networks according to ETCS-2 (European Train Control System) standards even though it is difficult to implement.

The adjacent cell list (ACL) of each cell includes such neighbouring cells to which a Mobile Station may be handed over; the parenting cell list of each cell includes such neighbouring cells from which Mobile Stations have been handed over. While adjacent cells are defined and the ACLs are prepared by an operator, a PCL is composed piecewise upon reception of a RAN Information Request for handover in a BSS originating from a cell connected to another BSS, whereupon the receiving BSS stores the originating cell as parenting cell in the parenting cell list (PCL) of the receiving cell of said RAN Information Request.

In general, a cell stored in the ACL of another cell also has the other cell stored in its own ACL; still such a symmetric relation is not imperative, as certain handovers from one to another cell might be undesirable in one direction, e.g. for traffic control reasons. Thereby, ACLs - and consequently the corresponding PCLs - can also be unsymmetric.

In the case where a cell is temporarily inoperable, e.g. for maintenance or software upgrade reasons, due to a transceiver failure or a frequency plan change, it is specified by the RAN Information Management protocol that the BSS connected to this inoperable cell notifies the de-configuration of the cell to other BSSs which are connected to parenting cells as stored in the parenting cell list of the de-configured cell. However, when the de-configured cell is operable again, no mechanism is specified for notifying the parenting cells of the regained operability of the de-configured cell in order to reconfigure the de-configured cell.

The 3GPP technical report TR 44.901 V11.0.0 (2012-09), XP50649796, provides background information, motivations, concepts and requirements regarding an extended Network Assisted Cell Change (NACC) feature for external cell change support. This technical report shows that at start up, restart or deletion of a cell, the origin BSC sends an RAN Information Management protocol message to the affected external neighbouring BSCs.

It is an object of the invention to provide a method for automatically reconfiguring a de-configured cell in such a cellular mobile communication system, which method requires only little computational power and network resources and is consistent with the definition of the RAN Information Management protocol according to 3GPP standards.

This object is achieved with a method of the type mentioned above comprising, in the first Base Station System upon receipt of a notification by the second Base Station System concerning the second cell being de-configured, the following steps:
a) marking the second cell as de-configured in said adjacent cell list of the first Base Station System,
b) starting a polling timer and waiting for expiration of the polling timer,
c) sending a RAN Information Request to the second Base Station System requesting a System Information of the second cell, and
d) when no RAN Information containing the requested System Information is received from the second Base Station System, returning to step b), otherwise
e) marking the second cell as configured in said adjacent cell list of the first Base Station System.

This method takes advantage of the fact that, according to 3GPP standards, the second BSS only replies to the RAN Information Request of the first BSS in case the second cell is operable. Such a method can be implemented quickly and easily and is independent of the symmetry of the respective ACLs; it can be integrated into existing mobile communication systems, if necessary even gradually integrated, i.e. BSS by BSS, as it does not require full coverage throughout the mobile communication system. The demands in terms of computing power and network capacity are very low and the method conforms to the 3GPP standards while allowing the automatic reconfiguration of a previously de-configured cell.

For keeping the network load low and still reconfiguring a de-configured cell soon after recovery, in step b) the polling timer is preferably set to expire 1 to 30 minutes, particularly preferably 5 to 15 minutes, after starting.

In a favourable embodiment of the invention, in step e) the System Information contained in said received RAN Information is stored in said adjacent cell list of the first Base Station System. Thereby, the System Information of the second cell is available in the first Base Station System for subsequent requests of Mobile Stations located in the first cell (or other cells connected to the first BSS) reducing the future load in the mobile communication system until a potential later de-configuration of the second cell.

For accelerating the reconfiguration of the de-configured second cell it is particularly preferred that when a request for a handover from the first to the second cell is received at the first Base Station System during execution of steps a) to d) from a Mobile Station located in the first cell, the first Base Station System directly proceeds to step e), and/or when a RAN Information Request in consequence of the second cell having regained operability is received at the first Base Station System during execution of steps a) to d) from the second Base Station System with the first cell being defined as an adjacent cell to the second cell, the first Base Station System directly proceeds to step e). As a Mobile Station can only detect an operable cell, such a request for a handover reliably indicates the operability of the second cell; similarly, the second BSS would only send said RAN Information Request - addressed to the adjacent cells of the second cell - once the second cell becomes operational. Therefore, the second cell can immediately be reconfigured in such cases, without waiting for the expiration of the polling timer.

The invention will now be described in further detail by means of an exemplary embodiment thereof under reference to the enclosed drawings in which:
Fig. 1 shows a block-diagram of a cellular mobile communication system capable of applying the method for reconfiguring a de-configured cell according to the invention; and
Fig. 2 shows a flow-chart of the method according to the invention.

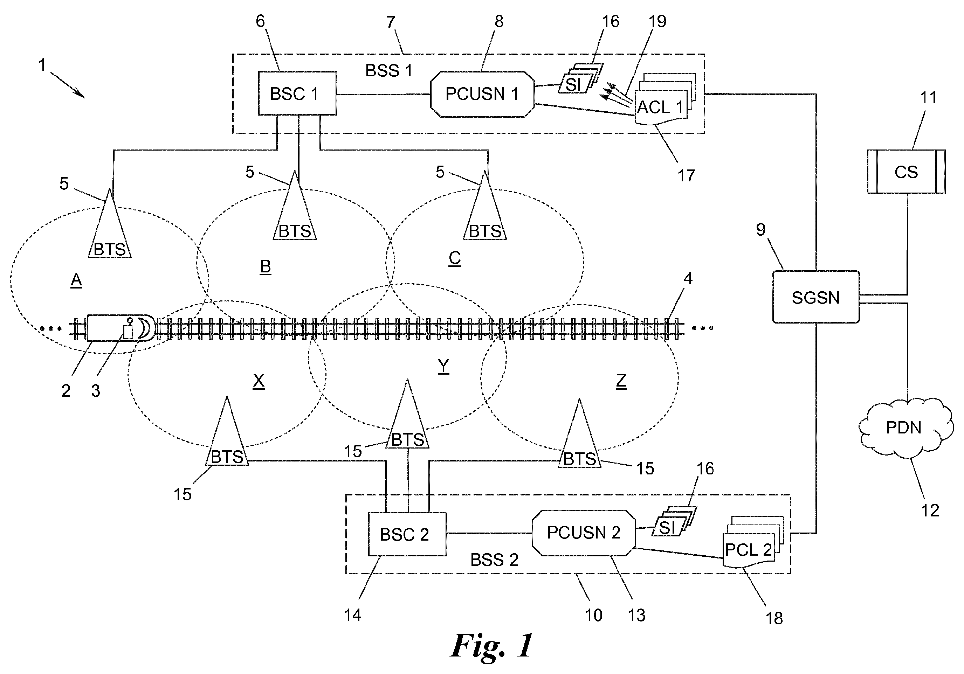

In a cellular mobile communication system 1 according to Fig. 1, a train 2 carrying an onboard Mobile Station 3 runs on a rail track 4.

The mobile communication system 1 in the present example is a GSM-R system according to the ETSI (European Telecommunications Standards Institute) set of standards and EIRENE (European Integrated Railway Radio Enhanced Network) requirements; it could alternatively be a common GSM system according to the ETSI set of standards, a UMTS system according to the IMT-2000 (International Telecommunications Union) set of standards, an LTE system or a similar cellular mobile communication system 1 according to a 3GPP standard. The mobile communication system 1 provides mobile data communication services under a RAN Information Management protocol, details of which are defined in the 3GPP technical specification TS 48.018 V11.2.0, "BSS GPRS Protocol (BSSGP)", downloadable from www.3gpp.org/ftp/Specs/ html-info/48018.htm. The Mobile Station 3 could be onboard a different type of vehicle and/or be a handheld cellular phone or similar device.

When the train 2 in Fig. 1 is located in a first cell A of the cellular mobile communication system 1, the Mobile Station 3 is wirelessly connected to a Base Transceiver Station (BTS) 5 facilitating mobile communication in the first cell A. The BTS 5 is connected to and controlled by a Base Station Controller (BSC) 6 of a first Base Station System (BSS) 7, in this case handling packet switched data transmissions. The first BSS 7 also comprises a Packet Control Unit Support Node (PCUSN) 8 controlling the flow of data packets transmitted. A Serving GPRS Support Node (SGSN) 9 links the first BSS 7 with other BSSs, e.g. a second BSS 10, a central system (CS) 11, other mobile communication systems (not shown in Fig. 1) and/or provides data services, e.g. connection to a Packet Data Network 12 like the Internet, thus providing data communication services to the Mobile Station 3 within and outwards the mobile communication system 1.

The second BSS 10, similar to the first BSS 7, comprises a PCUSN 13 and a BSC 14 and is connected to and controls a BTS 15 facilitating mobile communication, e.g. in a second cell X. As shown in Fig. 1, each BSC 6, 14 can be connected to more than one BTS 5, 15; in the given example, apart from the first cell A, the first BSS 7 thereby also controls a cell B and a cell C, and the second BSS 10 also controls a cell Y and a cell Z apart from the second cell X.

For each connected cell A, B, C, the first BSS 7 stores a System Information (SI) 16 which includes individual communication parameters of the respective cell A, B or C, as does the second BSS 10 for each cell X, Y, Z connected thereto.

In the example of Fig. 1, the first cell A is a neighbouring cell to cell B (connected to the first BSS 7) and to the second cell X (connected to the second BSS 10). The second cell X, being connected to a different BSS, is a "remote" cell to the first cell A and is further defined as an "adjacent" cell to the first cell A, thereby allowing for a handover of Mobile Stations from the first cell A to the second cell X and reciprocally making the first cell A a "parenting" cell to the second cell X. For each connected cell A, B, C the first BSS 7 stores a list of all adjacent cells in an adjacent cell list (ACL) 17. E.g. for the first cell A the ACL 17 contains the adjacent cells B and X in this example. The first BSS 7 can optionally also store the SI 16 of remote adjacent cells, e.g. of the second cell X.

Similar to the first BSS 7, the second BSS 10 stores adjacent cell lists (ACLs) 17 for each of the connected cells X, Y, Z (not shown in Fig. 1). Furthermore, the second BSS 10 stores cells which hand over Mobile Stations in parenting cell lists (PCLs) 18 for each of the connected cells X, Y, Z, e.g. PCL 18 for the second cell X listing cells A, B as parenting cells, which the first BSS 7 similarly does for the cells A, B, C connected thereto. The second BSS 10 can also optionally store the SI 16 of remote adjacent cells.

The SI 16 of respective adjacent cells A, B or X can either be stored directly in the respective ACL 17, or stored in a separate memory area of the respective BSS 7, 10 with a pointer 19 pointing from said ACL 17 to the respective memory area; both of these options are comprised by the term "SI stored in an ACL" used in the present disclosure.

It is understood, that the ACLs 17 and PCLs 18 of neighbouring cells are typically symmetric, i.e. a cell being included in the ACL 17 or PCL 18 of another cell would also have that other cell included in its own ACL 17 or PCL 18. For specific reasons, though, e.g. for traffic control, certain handovers might be undesirable completely or at least in one direction; in the latter case a cell can be stored in the ACL 17 of a neighbouring cell enabling a handover in this direction, while the latter cell is deliberately excluded from the other cell's ACL 17 prohibiting a handover in the other direction. Thereby, not only the ACLs 17 but also the PCLs 18 of the two cells are unsymmetric.

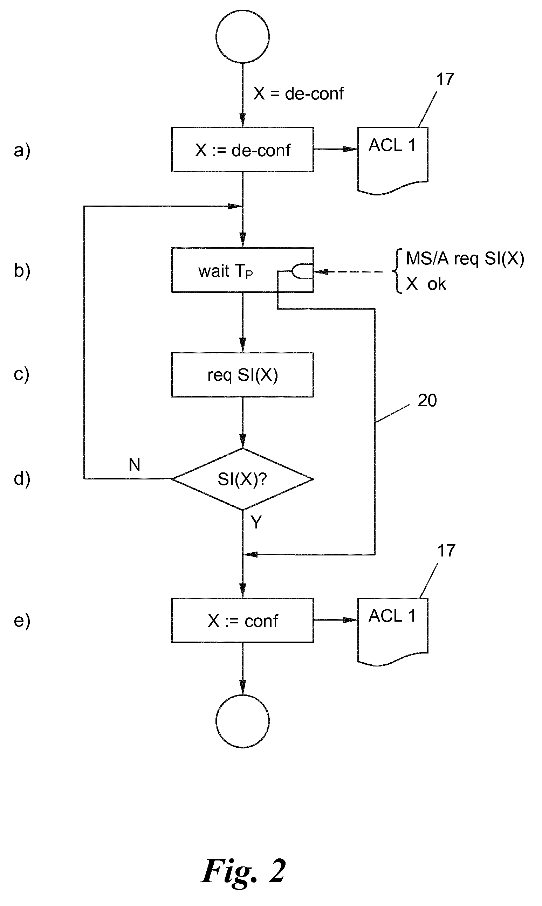

On the basis of this exemplary setup, the method for reconfiguring a de-configured cell shall now be explained by means of the flow chart of Fig. 2.

As step a) in Fig. 2 shows, if a cell (in the present example: the second cell X) becomes temporarily inoperable, the connected BSS (here: the second BSS 10) notifies all BSSs which are connected to parenting cells (here: cells A, B) stored in the parenting cell list (here: PCL 18) of the inoperable cell that the cell is being de-configured. In the present example, the second BSS 10 sends a notification according to the RAN Information Management protocol to the first BSS 7 which marks the second cell X as "de-configured" in the ACL 17 of all cells featuring cell X, here: inter alia ACL 17 of cell A.

For each cell marked as de-configured, the first BSS 7 starts in step b) a polling timer Tₚ and waits for expiration of the polling timer Tₚ. The polling timer Tₚ can be set to expire 1 - 30 minutes, preferably 5 - 15 minutes, after starting. In the present example, it is set to 10 minutes.

After expiration of the polling timer Tₚ, the process proceeds to step c) in which the first BSS 7 sends a "RAN Information Request" - a request message commonly used when requesting specific information from one cell, e.g. for preparing a handover of a data link from one cell to another according to the RAN Information Management protocol - to the second BSS 10, requesting the SI 16 of the cell X which was marked as de-configured. In case the cell X is operable when the second BSS 10 receives the RAN Information Request from the first BSS 7, it returns the requested SI 16 in a "RAN Information" message according to the RAN Information Management protocol, otherwise, the second BSS 10 does not reply.

In step d), the first BSS 7 checks whether a RAN Information message containing said requested SI 16 is received from the second BSS 10 and, if not (branch "N"), returns to step b). If, on the other hand, the first BSS 7 receives the requested SI 16 from the second BSS 10 (branch "Y"), this is an indicia that the cell X is operable (configured) again and the first BSS 7 can proceed to step e) and mark the second cell X as "configured" in the ACL 17 of the first cell A. For later use, the SI 16 contained in said received RAN Information can additionally be stored in said ACL 17.

If an inoperable cell X becomes operable during execution of one of the steps a) to d) (in the example of Fig. 2: during step b), before the polling timer Tₚ expires) the reconfiguring of the de-configured cell X can be accelerated in two ways:
- On the one hand, when the Mobile Station 3 approaches the second cell X as shown in Fig. 1, the Mobile Station 3 recognises such an approach by detecting the second cell X being operable and requests a handover from the first cell A to the second cell X from the first BSS 7; due to this evident operability of the second cell X, the first BSS 7 can directly proceed to step e), depicted as path 20 in Fig. 2 (in this example, without waiting for expiration of the polling timer Tₚ).
- On the other hand, when the first cell A is defined as an adjacent cell to the second cell X, the first BSS 7 can also directly proceed to step e) via path 20 when a RAN Information Request in consequence of the second cell (X) having regained operability is received at the first BSS 7 during execution of steps a) to d) from the second BSS 10.

The presented method for reconfiguring a de-configured cell is not limited to a specific BSS or a specific application but can be deployed in any BSS and in a plurality of applications of the RAN Information Management protocol, such as a Network Assisted Cell Change (NACC), an SI3 application, a Self-Optimized Network (SON) application or a Multimedia Broadcast Management System (MBMS) application. Furthermore, the invention is not limited to the preferred embodiments described in detail above but comprises all modifications thereof which fall into the scope of the appended claims.

## Claims

1. A method for reconfiguring a de-configured cell (X) of a cellular mobile communication system (1), the system (1) using a RAN Information Management protocol according to a 3GPP standard,
wherein a first cell (A) is connected to a first Base Station System (7) and serves as a parenting cell to a second cell (X), the second cell (X) being connected to a second Base Station System (10) and being defined as an adjacent cell to the first cell (A), the first and the second Base Station System (7, 10) being linked via a Serving GPRS Support Node (9), the first Base Station System (7) storing a list of cells (17) being adjacent to the first cell (A) and the second Base Station System (10) storing a list of cells (18) being parenting cells to the second cell (X),
comprising, in the first Base Station System (7) upon receipt of a notification by the second Base Station System (10) concerning the second cell (X) being de-configured, the following steps:
a) marking the second cell (X) as de-configured in said adjacent cell list (17) of the first Base Station System (7),
b) starting a polling timer (Tₚ) and waiting for expiration of the polling timer (Tₚ),
c) sending a RAN Information Request to the second Base Station System (10) requesting a System Information (16) of the second cell (X), and
d) when no RAN Information containing the requested System Information (16) is received from the second Base Station System (10), returning to step b), otherwise
e) marking the second cell (X) as configured in said adjacent cell list (17) of the first Base Station System (7).

2. The method according to claim 1, wherein in step b) the polling timer (Tₚ) is set to expire 1 to 30 minutes, preferably 5 to 15 minutes, after starting.

3. The method according to claim 1 or 2, wherein in step e) the System Information (16) contained in said received RAN Information is stored in said adjacent cell list (17) of the first Base Station System (7).

4. The method according to any one of the claims 1 to 3, wherein, when a request for a handover from the first to the second cell (X) is received at the first Base Station System (7) during execution of steps a) to d) from a Mobile Station (3) located in the first cell (A), the first Base Station System (7) directly proceeds to step e).

5. The method according to any one of the claims 1 to 4 with the first cell (A) being defined as an adjacent cell to the second cell (X), wherein, when a RAN Information Request in consequence of the second cell (X) having regained operability is received at the first Base Station System (7) during execution of steps a) to d) from the second Base Station System (10), the first Base Station System (7) directly proceeds to step e).

## Patentansprüche

1. Verfahren zum Rekonfigurieren einer dekonfigurierten Zelle (X) eines zellularen Mobilkommunikationssystems (1), wobei das System (1) ein RAN-Informations-Management-Protokoll gemäß einem 3GPP-Standard benutzt,
wobei eine erste Zelle (A) mit einem ersten Basisstationssystem (7) verbunden ist und als eine Elternzelle für eine zweite Zelle (X) dient, wobei die zweite Zelle (X) mit einem zweiten Basisstationssystem (10) verbunden ist und als eine Nachbarzelle zur ersten Zelle (A) definiert ist, wobei das erste und das zweite Basisstationssystem (7, 10) über einen Serving-GPRS-Support-Knoten (9) verbunden sind, wobei das erste Basisstationssystem (7) eine Liste (17) von zur ersten Zelle (A) benachbarten Zellen gespeichert hat, und wobei das zweite Basisstationssystem (10) eine Liste von Zellen (18) gespeichert hat, die Elternzellen der zweiten Zelle (X) sind,
umfassend, im ersten Basisstationssystem (7) nach dem Empfangen einer Benachrichtigung durch das zweite Basisstationssystem (10) betreffend die Dekonfiguration der zweiten Zelle (X), die folgenden Schritte:
a) Markieren der zweiten Zelle (X) als dekonfiguriert in der genannten Nachbarzellenliste (17) des ersten Basisstationssystems (7),
b) Starten eines Abfragetimers (Tₚ) und Warten auf das Ablaufen des Abfragetimers (Tₚ),
c) Senden einer RAN-Informationsanfrage an das zweite Basisstationssystem (10), die eine Systeminformation (16) der zweiten Zelle (X) anfordert, und
d) wenn keine RAN-Information, die die angeforderte Systeminformation (16) enthält, vom zweiten Basisstationssystem (10) empfangen wird, Zurückkehren zu Schritt b), anderenfalls
e) Markieren der zweiten Zelle (X) als konfiguriert in der genannten Nachbarzellenliste (17) des ersten Basisstationssystems (7).

2. Verfahren nach Anspruch 1, wobei in Schritt b) der Abfragetimer so gesetzt wird, dass dieser 1 bis 30 Minuten, bevorzugt 5 bis 15 Minuten, nach dem Starten abläuft.

3. Verfahren nach Anspruch 1 oder 2, wobei in Schritt e) die in der genannten RAN-Information enthaltene Systeminformation (16) in der genannten Nachbarzellenliste (17) des ersten Basisstationssystems (7) gespeichert wird.

4. Verfahren nach einem der Ansprüche 1 bis 3, wobei, wenn eine Anfrage für einen Handover von der ersten zur zweiten Zelle (X) im ersten Basisstationssystem (7) während des Ausführens der Schritte a) bis d) von einer sich in der ersten Zelle (A) befindenden Mobilstation (3) empfangen wird, das erste Basisstationssystem (7) direkt zu Schritt e) übergeht.

5. Verfahren nach einem der Ansprüche 1 bis 4, wobei die erste Zelle (A) als Nachbarzelle zur ersten Zelle (X) definiert ist und wobei, wenn in Folge eines Wiederherlangens der Betriebsfähigkeit der zweiten Zelle (X) eine RAN-Informationsanfrage im ersten Basisstationssystem (7) während des Ausführens der Schritte a) bis d) vom zweiten Basisstationssystem (10) her empfangen wird, das erste Basisstationssystem (7) direkt zu Schritt e) übergeht.

## Revendications

1. Procédé de reconfiguration d'une cellule (X) dé-configurée d'un système (1) de communication cellulaire mobile, le système (1) utilisant un protocole de gestion de l'information par RAN selon une norme 3GPP,
où une première cellule (A) est connectée à un premier système de station de base (7) et sert de cellule parentale à une seconde cellule (X), la seconde cellule (X) étant connectée à un second système de station de base (10) et étant définie comme une cellule adjacente à la première cellule (A), les premier et second systèmes de station de base (7, 10) étant reliés via un noeud de support du GPRS servant (9), le premier système de station de base (7) stockant une liste de cellules (17) étant adjacentes à la première cellule (A) et le second système de station de base (10) stockant une liste de cellules (18) étant des cellules parentales de la seconde cellule (X),
comprenant, dans le premier système de station de base (7), sur réception d'une notification par le second système de station de base (10) concernant la seconde cellule (X) étant dé-configurée, les étapes suivantes :
a) le marquage de la seconde cellule (X) comme étant dé-configurée dans ladite liste de cellules adjacentes (17) du premier système de station de base (7),
b) le démarrage d'une temporisateur d'interrogation (Tₚ) et l'attente de l'expiration du temporisateur d'interrogation (Tₚ),
c) l'envoi d'une demande d'information RAN au second système de station de base (10) demandant une information système (16) de la seconde cellule (X), et
d) lorsqu'aucune information RAN contenant l'information système (16) demandée n'est reçue en provenance du second système de station de base (10), le retour à l'étape b), sinon
e) le marquage de la seconde cellule (X) comme étant configurée dans ladite liste de cellules adjacentes (17) du premier système de station de base (7).

2. Procédé selon la revendication 1, dans lequel, dans l'étape b), le temporisateur d'interrogation est réglé pour expirer au bout de 1 à 30 minutes, de préférence au bout de 5 à 15 minutes, après son démarrage.

3. Procédé selon la revendication 1 ou 2, dans lequel, dans l'étape e), l'information système (16) contenue dans ladite information RAN reçue est stockée dans ladite liste des cellules adjacentes (17) du premier système de station de base (7).

4. Procédé selon l'une quelconque des revendications 1 à 3, dans lequel, lorsqu'une demande de passage de la première à la seconde cellule (X) est reçue par le premier système de station de base (7) au cours de l'exécution des étapes a) à d) en provenance d'une station mobile (3) située dans la première cellule (A), le premier système de station de base (7) avance directement à l'étape e).

5. Procédé selon l'une quelconque des revendications 1 à 4 avec la première cellule (A) étant définie comme étant une cellule adjacente à la seconde cellule (X), où, lorsqu'une demande d'information RAN, compte tenu du fait que la seconde cellule (X) a retrouvé son opérabilité, est reçue par le premier système de station de base (7) au cours de l'exécution des étapes a) à d) en provenance du second système de station de base (10), le premier système de station de base (7) avance directement à l'étape e).
